Europäisches Patentamt

European Patent Office

Office européen des brevets

(11) Publication number: **0 464 660 A1**

# EUROPEAN PATENT APPLICATION

(21) Application number: **91110638.3**

(22) Date of filing: **27.06.91**

(51) Int. Cl.5: **B60C 11/00**, B29D 30/56

(30) Priority: **06.07.90 US 549523**

(43) Date of publication of application:
**08.01.92 Bulletin 92/02**

(84) Designated Contracting States:
**BE DE FR GB GR LU NL**

(71) Applicant: **THE GOODYEAR TIRE & RUBBER COMPANY**
**1144 East Market Street**
**Akron, Ohio 44316-0001(US)**

(72) Inventor: **Majerus, Norbert**
**2286 Rickel Drive**
**Akron, Ohio 44333(US)**
Inventor: **Magee, Arthur Webster**
**3326 Longwood**
**Norton, Ohio 44203(US)**
Inventor: **Parrish, Gary Charles**
**3976 Massillon Road, Apt. E.**
**Uniontown, Ohio 44685(US)**
Inventor: **Rooney, Timothy Michael**
**20 Glenside Drive**
**Munroe Falls, Ohio 44262(US)**
Inventor: **Chlebina, Lawrence Edward**
**1107 Rollowing Meadow Road**
**Akron, Ohio 44333(US)**

(74) Representative: **Leitz, Paul**
**Goodyear Technical Center-Luxembourg**
**L-7750 Colmar-Berg(LU)**

(54) **A tread for truck tires.**

(57) A precured tire tread (10) made of elastomeric material and suitable for mounting on a prepared steel belted radial truck tire casing is described. The tread preferably is injection molded and has a ground engaging surface (400) with grooves (403) and an inner tread (300) of minimal thickness. The tread has a pair of wings (100,200) that extend radially inwardly from the ground engaging surface a distance less than two times the tread thickness. The wings on their inner surface have a concave curvature that is an extension of the radially inner tread surface. The wings are axially spaced a distance within a range of 100% to 120% of the axial width of the ground engaging surface. The tread is designed to be mounted to a prepared truck casing of similar mating curvature. The design is such that the prepared truck casing and the inner surfaces of the tread are in complete surface contact. The tread is also designed such that variations in casing widths of 0.25 inches greater or 0.25 inches smaller than the wing axial spacing can be accommodated while maintaining complete contact at the mating surfaces.

EP 0 464 660 A1

EP 0 464 660 A1

FIG. 1

## Background of the Invention

This invention relates to a precured and preferably injection molded tread designed to be mounted on a prepared truck casing, either new or in the process of being retreaded.

Currently, it is economically efficient to replace the worn out truck tread with a replacement tread. Multi-ply truck tires are designed to survive several times longer than the tread. To take advantage of the casing life, various ways to replace the worn tread have been used.

The casing is prepared by buffing off the worn tread. A replacement tread can be molded directly on the tire by a procedure known in the art as "hot capping" or "conventional retreading" wherein uncured rubber is layered onto the buffed casing which in turn is placed in a mold, and the layered rubber is cured. Hot capping molds the tread directly onto the casing such that good surface adhesion and minimal stresses are in the tread. The primary disadvantages are the length of time needed to cure the tread and the mold costs.

Alternatively, a method of "cold capping" can be used wherein a thin layer of unvulcanized rubber is placed on the buffed casing, and a precured replacement tread is then assembled to the tire casing and bonded to it by curing the thin layer. The primary advantages of cold capping with precured treads are reduced curing time and reduced tooling cost.

There are a wide variety of truck tires manufactured with several diameters, and within these sizes there are various tread widths. To accommodate the various sizes, the truck replacement treads were generally made in flat strips or rings.

The flat strip treads are generally compression molded treads having a minimum inner tread thickness of 5/32 or greater. The flat treads had no radially extending wings and were simply mounted to a casing that had the worn tread surface removed. The thick inner tread of these strips had poor rolling resistance characteristics, and the appearance of the tread to casing bond line made it readily apparent that the tire had been recapped. Due to the large number of truck tires manufactured in a variety of styles and sizes, the flat tread in many cases had a tread width that was not the same as the original tire, and the fact that the tire was recapped was readily visually apparent. Additionally, if the original tire had a narrower tread width than the strip tread, the worn tread had to be removed such that the new tread would fit. In most cases, to use the casing required removing the worn tread extremely close to the belt wires or contouring the prepared casing such that the tread was axially bent or curved to fit the tire. This resulted in an inferior retreaded tire. The preferred solution was to design flat tread strips that were generally narrower than the original tire tread width. Alternatively, a range of sizes of flat tread widths were required.

Another problem of the flat tread was the fact that the tread was cut to length and butt spliced. To remedy this problem, annular flat ring treads were introduced; however, all the above mentioned problems relating to flat strip treads with the exception of butt splicing still remained. Compression molded winged treads primarily for use in passenger tires had been introduced; however, these treads were not suited for the rigorous demands of truck tires. Additionally, these treads had shoulder wings that extended substantially upwardly, thereby, covering the recapped tire's sidewall. The result was increased weight and material usage to achieve new tire appearance. In the truck industry, rolling weight is critical. Furthermore, the sidewall of a truck tire is a highly flexed area that is exposed to extremely high flexure stress. The sidewall area is ill suited for terminating the tread to casing joint. Therefore, in the past, wing truck treads were not successfully used.

The present invention is capable of being mounted to a precured truck tire tread and can accommodate tires with larger and with narrower tread widths while still providing good bond line adhesion.

The present invention provides a precured truck tread with wings that when mounted to a prepared truck tire casing has the cosmetic appearance of a new truck tire.

This invention provides a tread that can be of a spliceless annular ring shape or of arcuately shaped tread requiring a spliced butt joint.

## Related Art

McGee et al, U.S. Patent 4,792,379, assigned to Long Mile Rubber Company, issued December 20, 1988, teach a method and apparatus for "hot cap" retreading, and more particularly, to tire recapping with flexible segmented molds. In retreading conventional tires, a given tire size may vary from one to five inches in circumference. By placing a sizing segment between the ends of the two mold sections, this variance could be accommodated. Without this segment, various size mold halves are required for "hot cap molding".

Neal, U.S. Patent 3,815,651, issued June 11, 1974, teaches a replacement tread particularly adaptable for passenger tires. The tread is made by compression molding. The tread includes an endless premolded central tread portion with integral shoulder wings, the tread being diametrically and axially smaller than the casing to which the tread is mounted. The shoulder wing extends to cover approximately the entire sidewall of the casing.

Hedlund, U.S. Patent 4,239,075, issued December 16, 1980, teaches a precured tire tread for use in retreading tires having a concave tread surface and a flat rear surface adapted to be mounted to a buffed casing. When mounted, the flat rear surface conforms to the contour of the casing such that the road contact surface is flat. The tread is designed to be butt spliced onto the casing.

Brodie, U.S. Patent 3,951,720, issued in 1976, teaches materials and methods for bonding a prevulcanized tread strip to the periphery of a tire by cold vulcanization. It relates to a strip of bonding material, to methods for making the material and to methods for using the material in the bonding of the tread strip to the tire.

Norwalk, U.S. Patent 2,976,910, and Carver, U.S. Patents 3,136,673 and 3,236,709 all teach the broad concept of cold bonding a prevulcanized rubber tread strip to the periphery of a tire.

Hedlund, UK Patent Application GB 2,031,352A teaches a butt end spliced tread with a reinforcing belt.

Hijikata, Japanese unexamined patent disclosure number 295243-1988, published December 1, 1988, describes a flat precured tread with removable sealing plates attached at the tread shoulders.

Summary of the Invention

A tire tread of elastomeric material for mounting on a prepared tubeless steel belted radial truck tire casing has a ground engaging surface with grooves and an inner tread of minimal thickness. The grooves extend radially inwardly from the ground engaging surface of the tread, and the material radially inward of the grooves constitute the inner tread, the inner tread having a radially inner tread surface. The tread, when in annular configuration, has a cross section including first and second wings respectively extending radially inwardly and axially outwardly from an axially outermost point on the ground engaging surface. The wings extend radially inwardly a distance less than two times the thickness of the tread, the tread thickness being measured at the equatorial plane, each wing having an inner wing surface, and the inner wing surface having a concave curvature that is an extension of the inner tread surface. The tread is dimensioned such that the first and second wings are axially spaced a distance between the axially outermost point of the radially innermost curvature of the wings, such distance being within a range of axial distances from 100% to 120% of the axial width of the ground engaging surface. The tread is designed for mounting on at least one kind of commercial truck tire casing. When such casing is prepared with a convex curvature and axial width similar to the concave inner tread and wing surfaces, a complete surface contact with such casing occurs at the inner surface of the tread and wings such that the wings are not substantially compressed or stretched in the axial direction.

The tread is designed to accommodate prepared casings of a commercial size up to 0.25 inches greater or up to 0.25 inches smaller in axial width than the width of the aforementioned prepared casing at the convex curvature of the prepared casing where contact with the radially innermost curvature of the wings occurs. When mounted to the 0.25 greater axial width casing, the wings are stretched and deflected axially outwardly, and when mounted to the 0.25 smaller tread width casing, the wings are moved radially inwardly and compressed axially inwardly. In both cases, the tread is mounted such that the inner surfaces of the tread and wings are in complete contact with the prepared casing.

In its preferred embodiment, the tread is injection molded under high pressure of at least 20,000 psi. The molded article can be of the preferred annular spliceless ring tread configuration or can be an arcuately shaped tread adapted to be spliced into an annular configuration. The injection gate and overflow gate are designed to be removed such that no flash or remnant material is left on the tread to interfere with the bonding of the tread to the casing.

Brief Description of the Drawings

Fig 1 illustrates the annular tread as molded with the removable injection gate and injection tearoff cord and the overflow gate, overflow tearoff cord and vents depicted.

Fig 2 illustrates the arcuately shaped tread as molded with the removable injection gate and injection tearoff cord and the overflow gate, overflow tearoff cord and vents depicted.

Fig 3 is a view of the ground engaging tread surface with the injection gate and injection tearoff cord and the overflow gate, overflow tearoff cord and vent tabs depicted.

Fig 4 is a cross sectional view of the tread taken on lines 4-4 of Fig 3.

Fig 5 is a cross sectional view of the first wing with injection gate and injection cord illustrated, the view taken on lines 5-5 of Fig 3.

Fig 6 is a cross sectional view of the second wing with injection gate and injection tearoff cord illustrated, the view taken on lines 6-6 of Fig 3.

Fig 7 is a view of the tread when mounted to prepared casing of similar, larger, and smaller curvature.

Detailed Description of the Preferred Embodiment

The invention also may be better understood in the context of the following definitions, which are applicable to both the specification and the appended claims.

"Axial" is used herein to refer to lines or directions that are parallel to the axis of rotation of the casing or wheel.

"Buffed" means a procedure whereby the surface of an elastomeric tread or casing is roughened. The roughening removes oxidized material and permits better bonding.

"Cold capping" means a procedure whereby a premolded and precured tread is bonded to a prepared tire casing.

"Casing" means the casing, belt structure, beads, sidewalls, and all other components of the tire excepting the tread and undertread. The casing may be new, unvulcanized rubber or previously vulcanized rubber to be fitted with a new tread.

"Crown diameter" means the diameter at the equatorial plane of the radially outermost surface of the tire or prepared casing.

"Equatorial plane (EP)" means the plane perpendicular to the axis of rotation of the casing or wheel and passing through the center of the crown area of the casing.

"Hot capping" means a procedure whereby a layer of unvulcanized rubber is layered onto a prepared casing and molded directly onto the casing.

"Inner tread" is used herein to define tread material directly radially inward of the grooves.

"Pneumatic tire" means a laminated mechanical device of generally toroidal shape (usually an open torus) having beads and a tread and made of rubber, chemicals, fabric and steel or other materials. When mounted on the wheel of a motor vehicle, the tire through its tread provides traction and contains the fluid or gaseous matter, usually air, that sustains the vehicle load.

"Replacement tread" as used herein refers to a molded and precured tread.

"Retreading" means the procedure of refurbishing a tread worn tire by removing the old tread and replacing it with a precured tread or a "hot capped" tread.

"Radial" and "Radially" are used to mean directions radially toward or away from the axis of rotation of the casing or wheel.

"Sidewall" means that portion of the tire between the tread and the bead.

"Tread" means a molded rubber component which, when bonded to a tire casing, includes that portion of the tire which comes into contact with the road when the tire is normally inflated and under normal load.

"Tread width" means the arc length of the tread surface in the axial direction, that is in a plane passing through the axis of rotation of the tire.

"Wings" means the radial inward extension of the tread located at axial extremes of the tread.

In the drawings, the same numerals are used to designate the same components or items in the several views.

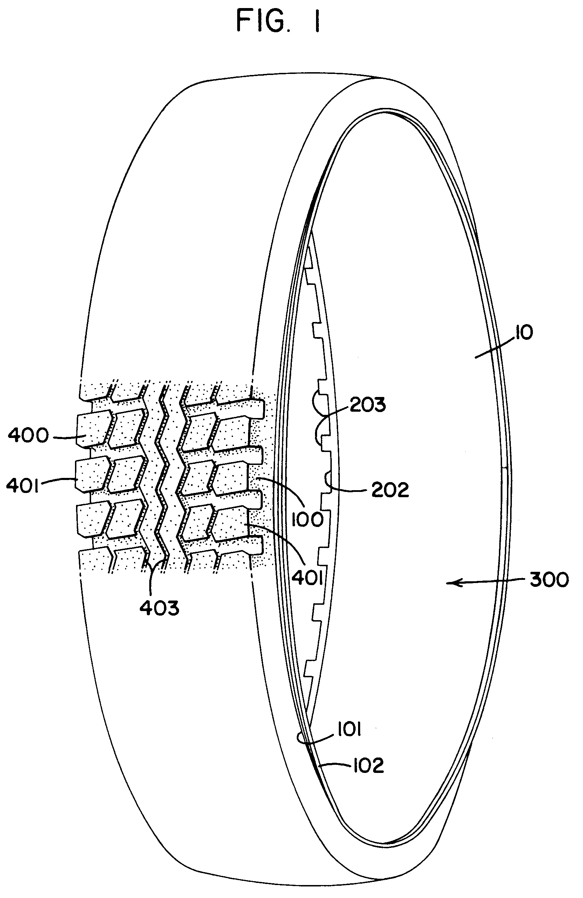

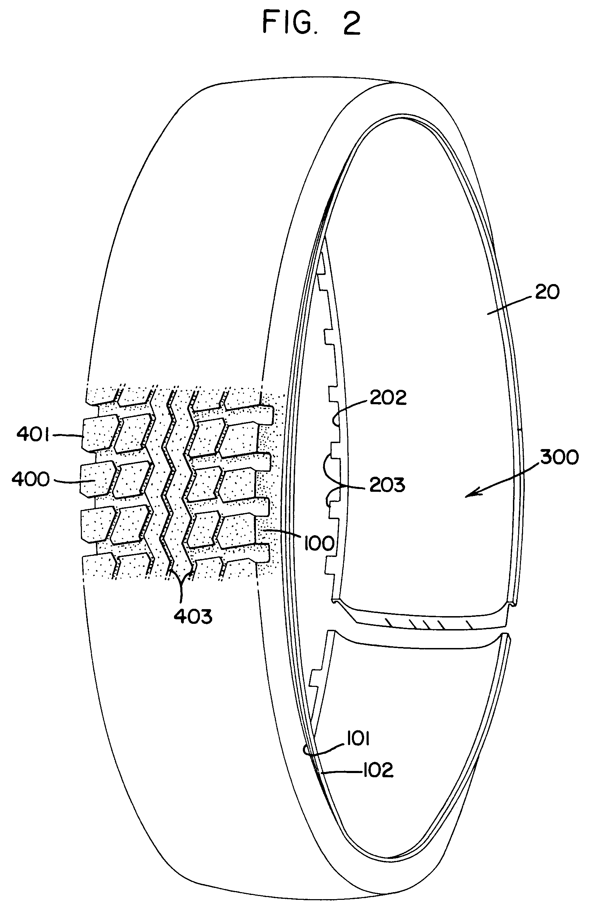

With particular reference now to Fig 1, an annular tread 10 is illustrated. Fig 2 illustrates an arcuately shaped tread 20. Both Fig 1 and Fig 2 depict the tread as molded. The illustrations showing the ground engaging surface 400, the inner tread surface 300 and the removable injection gate 101 and the injection cord 102 and the removable overflow gate 201 and overflow tearoff cord 202 and vent tabs 203.

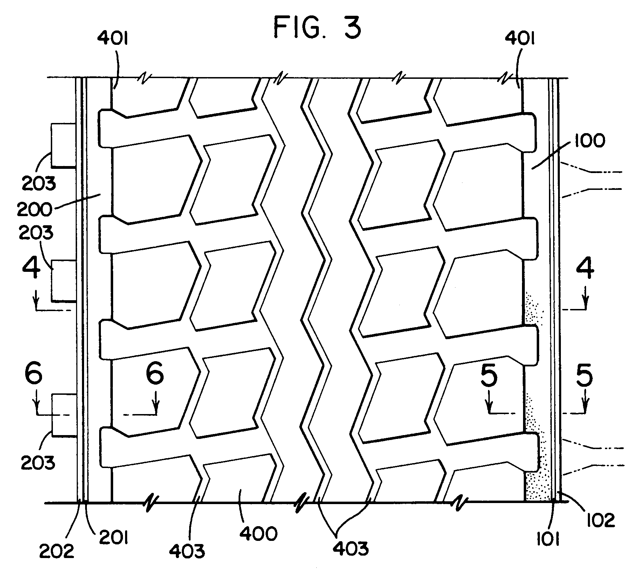

Fig 3 is a view of the tread showing the ground engaging surface 400, the tread grooves 403, the injection gate 101 and injection cord 102 and the vent 201 and vent cord 202 and vent tabs 203.

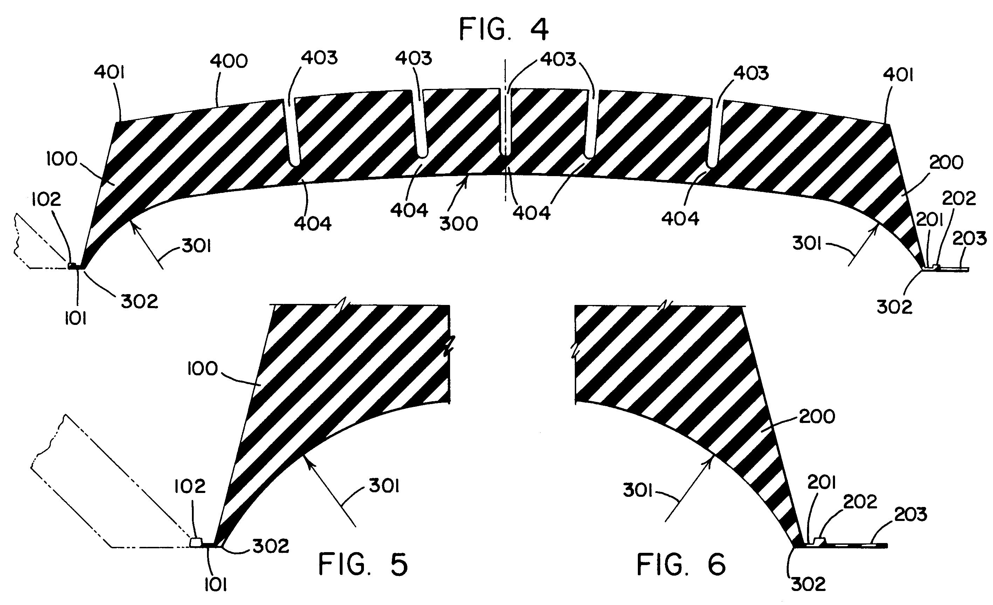

Fig 4 is a cross sectional view of the tread illustrating the radially outer tread ground engaging surface 400 with radially inward tread grooves 403 extending radially inwardly to a specified depth. The material directly radially inward of the groove constitutes the inner tread 404. The inner tread 404 has an inner surface 300. The axially outermost points 401 of the ground engaging surface 400 are shown. The wings 100 and 200 extend from the axially outermost points 401 and extend radially inward a distance less than two times the tread thickness. The first wing denoted 100 includes the removable injection gate 101 and cord 102. The second wing denoted 200 includes the overflow gate 201 and overflow tearoff cord 202 and vent tabs 203. Both wings have an inner wing surface 301, the inner wing surface 301 being curved and an extension of the inner tread surface 300. The wings are axially spaced a distance between the axially outermost point of the radially innermost curvature of the wings, the distance being measured from the radially innermost points 302 of the inner wing surfaces 301.

Fig 5 is a cross sectional view of the first wing 100 showing the injection gate 101 and injection cord in greater detail.

Fig 6 is an enlarged cross sectional view of the second wing showing the overflow gate 201, overflow tearoff cord 202 and vent tab 203.

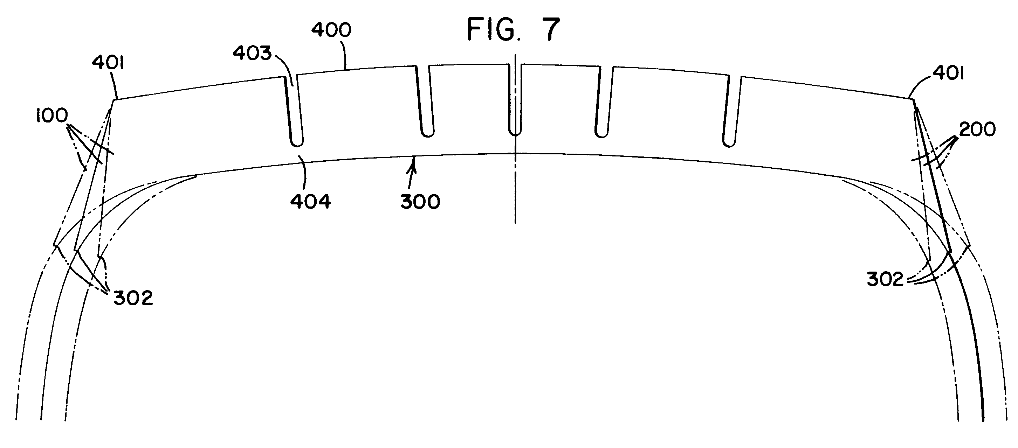

Fig 7 is a cross sectional view of the tread showing the deflection of the wings when mounted to a prepared casing of similar, larger, and smaller curvature.

The elastomeric tread can be manufactured either as an annular ring 10 such that no splicing is required or can be an arcuately shaped tread 20 adapted to be made into annular shape requiring a splice. The tread can be fabricated using a variety of methods. In the preferred embodiment, the tread is injection molded.

The tread when injection molded under pressures in the 20,000 to 30,000 psi range can be made such that the inner tread 404 is 5/32 of an inch or less. Injection molding has tighter tolerances than compression molding. As a result, the inner tread can be produced with a thinner, more uniform gauge thickness. A reduction in the inner tread thickness improves the performance of the tire by reducing the rolling resistance and also requires less material to manufacture the tread. In the preferred embodiment, the inner tread is 3/32 of an inch.

The tread has a pair of oppositely disposed wings 100 and 200, each wing extending radially inward from the axially outermost points 401 of the ground engaging surface 400. The wings extend radially inward less than twice the tread thickness, the thickness of the tread being measured at the equatorial plane of the tire. The radial extension of the wings is less than 1.75 inches, preferably 1.5 inches. The wings have an inner surface 301 which is an extension of the inner tread surface. The wing inner surface is curved. It is recommended that the curvature be a single radius less than 2.0 inches. In the preferred embodiment, the curvature is 1.5 inch radius.

The wings as measured axially from the radially innermost point 302 of the wing inner surface 301 are less than 0.060 inch but greater than 0.030 in axial thickness, the wing shape being conformable to allow for flexure axially inward or outward.

In the preferred embodiment, the first wing 100 has an injection gate 101 and injection tearoff cord 102 extending axially outward from the wing 100 at the wing's radially innermost location. The injection gate 101 and cord 102 are designed to be removed from the tread prior to mounting the tread to a casing. During molding, the injection cord 102 fills with liquified elastomeric material, and upon filling the cord 102, the molten elastomeric material is pushed across the injection gate 101 under extremely high pressure. The material fills the mold cavity pushing air out to the vents 203 of the second wing 200 until the overflow gate 201 and overflow tearoff cord 202 and the plurality of vent tabs 203 are filled with the tread material 202. The overflow gate 201, overflow tearoff cord 202 and vent tabs 203 are extended axially from the wing 200 at the radially innermost wing location. The overflow components, like the injection gate components, are designed to be removed prior to mounting the tread to a prepared casing. Both the overflow 201 and the injection gate 101 are dimensioned to separate from the wing tip before unduly stretching or tearing the wing. The injection gate 101 extends axially a maximum distance of 0.60 inches and is a maximum thickness of 0.020 inches, the overflow gate 201 being a maximum thickness of 0.020 inches and extending axially outward from the wing a maximum distance of 0.060 inches. In the preferred embodiment, the injection gate 101 is 0.015 inch thick and extends axially outward from the wings 0.040 inches.

The removable overflow tearoff cord 202 and the removable injection gate cord 102 are both substantially thicker than their respective adjacent injection gate 101 or overflow gate 201. The cords' recommended dimension in inches is 0.060 radial thickness by 0.60 axial width to 0.10 radial thickness by 0.10 axial width. The cord has a substantial square cross sectional area ranging from 0.0036 to 0.01 inch$^2$. The preferred embodiment is dimensioned 0.080 x 0.080 inch having a cross sectional area of 0.0064 inch$^2$. This material size and shape of the cords enables quick removal of the respective overflow and injection gates. The fact that both gates are displaced axially outward of their respective wings insures that no gate remnant material will be left in the bond line area of the wing inner surface to the casing. In the past, this remnant material, called "flash" in the art, has been known to cause bond line weakening of the tread to the casing at the edges.

Prior to mounting to a tire, the replacement tread must be buffed. Buffing is a roughening of the tread surface to be bonded to the tire. The present invention is so designed that the inner tread surface 300 and the inner surface 301 of the wings can be buffed. The buffing procedure removes oxidized material in the bond line area and makes the tread more susceptible to bonding to the prepared casing. In the past, truck replacement treads were flat with no wings, thus, they were were simpler to buff. Winged treads were not well suited for buffing and as a result such inferior welding of the tread to the casing at the sidewall occurred. The present invention is so designed to permit a wire buffing wheel to completely scratch the wing inner surfaces 301, creating groove lines that extend to a tread edge, while the inner tread surface 300 is buffed as conventionally done, creating circumferential groove lines. In the preferred embodiment, the wing inner surface curvature is a single radius adapted to be buffed by a wire wheel of similar curvature, thus creating a buffed surface texture with axially extending groove lines at the inner surface of the wings.

The article herein described can be used in the method to prepare an annular or arcuately shaped tread as described in copending application (Docket No 89090A), incorporated herein by reference. The tread having been so buffed is ready to be mounted to a prepared casing. A prepared casing in retreading is one in which the old worn tread is removed, the surface is contoured and buffed, and a layer of unvulcanized rubber is placed on the used casing. The present invention is so designed that the annular tread 10 is circumferentially stretched to fit over the prepared casing. In the preferred embodiment, the stretch is approximately equal to the as molded tread circumference prior to shrinkage minus the circumference of the shrunk tread. In the preferred embodiment, shrinkage is about 2.5%. Utilizing this predetermined amount of stretch is approximately equal to the shrink rate of the tread as molded and most closely approximates the amount of shrink as exhibited in the "hot cap" method of retreading.

In hot capping, as well as in new tire manufacture, a green (unvulcanized) tread layer is applied to a prepared casing. Upon curing, the tread shrinks to the shape of the casing. The shrinkage occurs primarily circumferentially. In "hot capping" the only stress induced into the tread is due to the shrinkage of the rubber. As a result, a very good bond with minimal stress in the tread is produced. Upon taking the "hot cap" tire from the mold, the tread shrinks down around the casing upon cooling. The stresses at the bond line are limited to shrinkage and, based on the fact that the stresses are minimal, the amount of relaxation over time is minimized. Thus, the bond line is subjected to the lowest reasonable forces. Conventional precured retreading with a butt splice joint also exhibits a low stress bond line, but the splice creates a weak point in the tire, a potential failure point, and a potential nonuniformity in the tread. By approximating the process used in hot capping, the present invention is designed to replicate the low stresses seen in hot capping while using a "cold capping" process. The tooling of the present invention is designed such that the tread when molded and prior to shrink will equal the diameter of a new or prepared casing. The molded tread shrinks upon cooling. Upon assembly to the prepared casing, the tread is stretched such that the annular tread ring is stretched back to the as molded condition. As a result, the amount of stress circumferentially approximately equals the stress induced had the tread been applied using a hot capping or in a new tire process. Due to the fact that the prepared casing is buffed with a slight crown, an axial stress due to shrinkage is also exhibited similar to but slightly below that of hot capping.

To accommodate the various diameter truck tires commercially available, the tread is made in several sizes. For example, to fit a 11R24.5,G167 truck tire with a prepared casing crown diameter of 42-1/16 inches, the tread has a relaxed diameter of 41; and for a 11R22.5,G167 truck tire with a prepared casing crown diameter of 40-1/16 inches, a tread relaxed diameter of 39-1/16 inches is recommended. The tread relaxed diameter is measured at the equatorial plane of the inner surface of the tread. Other basic tread and tire sizes can also be accommodated and are considered within the scope of the invention.

The arcuately shaped tread 10 is cut to fit the casing. It is recommended that the tread be cut to sit such that the ends of the tread when butted do not exceed a 2.5% stretch of the mounted tread. Stretching the tread in excess of this amount induces higher built in stresses which could lead to premature failure.

The first and second wings are axially spaced a distance, the distance being measured across the radially innermost curvature 302 of the wings and being within a range of axial distances from 100% to 120% of the ground engaging surface 400 as measured between the axially outermost points 401. In a typical tread, this means that the wings are axially extended approximately 1/2 inch further outward than the axially outermost point of the ground engaging surface. As shown in Fig 7, the tread when so dimensioned is designed such that when mounted to a prepared casing of a similar mating curvature a complete surface contact occurs at the inner surfaces of the tread and wings relative to the surface contour of the prepared casing. The tread is further designed such that when mounted to a prepared casing of similar mating curvature but having an axial width up to 0.25 inches larger than the axial spaced distance between the inner wing surfaces 301 of the first and second wings at the location where the radially innermost curvature of the wings contact the casing, the wings are stretched and deflected axially outward such that the inner surfaces of the tread and wings are in complete surface contact with the prepared casing. When the tread is mounted to a prepared casing of similar mating curvature but having an axial width up to 0.25 inches smaller than the axial spaced distance between the inner wing surfaces of the first and second wings at the location where the radially innermost curvature of the wings contact the casing, the wings are radially moved inward and axially deflected inward such that the inner surface of the tread and wings is in complete contact with the prepared casing.

The tread as described above is further capable of being mounted on prepared conventional bias truck tire casings.

Examples of treads with wings having the following axial spacing at the radially innermost curvature which can accommodate prepared casing widths measured at the convex curvature of the casing where the radially inner curvature of the wing contacts the casing are as noted:

| Treads with Wing Spacing | Accommodate Range of Casing Widths | For Use With Commercial tire |
|---|---|---|
| 8.18 in. | 7.93 to 8.43 in. | 11R22.5G167N |
| 8.18 | 7.93 to 8.43 | 11R24.5G167N |
| 8.50 | 8.25 to 8.75 | 11R22.5G167W |
| 8.50 | 8.25 to 8.75 | 11R24.5G167W |
| 9.87 | 9.62 to 10.12 | 315/80R22.5G167 |

The ability to accommodate prepared casings of varying axial widths allows for liberal manufacturing tolerances. In addition, the tread can be used in conjunction with the wide range of truck tires that are commercially available from the various tire manufacturers. Each tire having a slightly different structure means that not all tires can be buffed to the exact same dimension in terms of axial width. The present invention, as previously noted, can accommodate a half-inch variation of prepared casing axial widths among different brands of truck tires. This greatly increases the number of truck casings that can be accommodated by the tread and also eliminates the need to build separate tooling or molds for each of the various tires manufactured substantially reducing the tooling cost to retread worn truck tires.

The applicants' claimed invention enables a wider selection of truck tires to be refurbished. Retreaders have a problem acquiring adequate supplies of worn tire casings of acceptable quality for retreading. The U.S. government has recently restricted government purchases of truck tires imported from outside the U.S. in an attempt to slow down the rate of scrap tire casings filling U.S. landfills and creating environmental issues. The U.S. government further now requires U.S. government agencies to purchase retreaded truck tires for replacement purposes. The use of retreading extends the useful life of the truck tire and is an environmentally sound means of recycling. The present invention enables a wider range of tires to be acceptably retreaded while minimizing tooling cost.

While the specific embodiments of the invention have been illustrated and described, it will be recognized that the invention variously modified may be practiced without departing from the spirit of the invention. The invention is limited only by the following claims.

**Claims**

1.  A tire tread for mounting to a prepared tubeless steel belted radial truck tire casing, the tread being made from an elastomeric material, the tire tread characterized by a radially outer ground engaging surface, the tread having grooves extending radially inwardly from the ground engaging surface, the tread material radially inwardly of the grooves constituting an inner tread, the inner tread having a radially inner tread surface, the tread when in annular configuration having a cross section including first and second wings respectively extending radially inwardly and axially outwardly from an axially outermost point on the ground engaging surface, the wings extending radially inwardly a distance less than two times the thickness of the tread, the tread thickness being measured at the equatorial plane, each wing having an inner wing surface, the inner wing surface having a concave curvature, the curvature being an extension of the inner tread surface, the tread being dimensioned as follows:

    the first and second wings being axially spaced a distance measured between the axially outermost points of the radially innermost curvature of the wings, such distance being within a range of axial distances from 100% to 120% of the axial width of the ground engaging surface,

    the tread being capable of being mounted on at least one commercial size truck tire when such casing is prepared with a convex curvature and axial width similar to the concave inner curvature and axial width of the tread and wings, a complete surface contact with such casing occurring at the inner surface of the tread and wings such that the inner wings are not substantially compressed or stretched in the axial direction.

2.  A tread as in claim 1 further characterized by the tread accommodating a prepared casing of a commercial size up to at least 0.25 inches greater in axial width than the width of the aforementioned prepared casing of claim 1 at the convex curvature of the casing where contact with the radially innermost curvature of the wings occurs, the wings being stretched and deflected axially outwardly such that the inner surfaces of the tread and wings are in complete surface contact with the prepared casing of greater commercial size.

3. A tread as in claim 1 further characterized by the tread accommodating a prepared casing of commercial size up to at least 0.25 inches smaller in axial width than the width of the aforementioned prepared casing of claim 1 at the convex curvature of the casing where contact with the radially innermost curvature of the wings occurs, the wings being moved radially inwardly and deflected axially inwardly such that the inner surfaces of the tread and wings are in complete contact with the prepared casing of smaller commercial size.

4. A tread as in claim 1 further characterized by the tread accommodating a prepared casing of commercial size up to at least 0.25 inches greater axial width or up to at least 0.25 inches smaller axial width than the width of the aforementioned prepared casing of claim 1 at the convex curvature of the casing where contact with the radially innermost curvature of the wings occurs, the wing being stretched and deflected axially outwardly when the tread is mounted on the up to 0.25 inch greater axial width casing and being moved radially inwardly and deflected axially inwardly when the tread is mounted on the up to 0.25 inch smaller axial width casing, such that the inner surfaces of the tread and wing are in complete surface contact with the prepared casing with tread widths at or within 0.25 inches smaller to 0.25 inches greater axial widths than the prepared casing of claim 1 at the location where the radially innermost curvature of the wings contact the casing.

5. A tire tread as in claim 4 characterized by the tread being of a longitudinally arcuate shape adapted to be spliced into an annular shape.

6. A tire tread as in claim 5 characterized by the tread being of annular shape.

7. A tire tread as in claim 6 characterized by the tread being molded and wherein the diameter at the inner tread surface of the tread prior to shrinkage occurring after removal from the mold is approximately equal to a diameter of a typical buffed casing.

8. A tread as in claim 7 characterized by the tread being capable of being used on a 22.5 inch nominal bead diameter truck tire, the annular tread having an inside diameter in the relaxed state of about 39 1/16 inches.

9. A tread as in claim 8 characterized by the tread being capable of being used on a 24.5 inch nominal bead diameter tire, the tread having an inside diameter in the relaxed state of about 41.0 inches.

10. A tread as in claim 4 further characterized by having an inner tread thickness in the range from 3/32" to 5/32".

11. A tread as in claim 10 further characterized by having an inner tread thickness of 3/32".

12. A tread as in claim 4 further characterized by having a minimum wing thickness no less than about 0.030 inches.

13. A tread as in claim 12 further characterized by having a maximum wing thickness no greater than 0.060 inches.

14. A tread as in claim 13 characterized by the curvature of the wings being a single radius of curvature equal to or greater than 1.0".

15. A tread as in claim 14, characterized by the curvature being a single radius of curvature equal to or less than 2.0".

16. A tread as in claim 1 characterized by the first and second wings extending radially inwardly from the axially outermost point on a ground engaging surface a distance less than 1.75 inches.

# FIG. 1

# FIG. 2

FIG. 3

FIG. 4

FIG. 5

FIG. 6

FIG. 7

EP 0 464 660 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP - A1 - 0 176 945 (MICHELIN & CIE) * Fig. 1; claims * | 1 | B 60 C 11/00 B 29 D 30/56 |
| A | | 2-6 | |
| D,A | US - A - 3 815 651 (NEAL) * Fig. 2,4,5 * | 1-6 | |

TECHNICAL FIELDS
SEARCHED (Int. Cl.5)

B 60 C
B 29 D

The present search report has been drawn up for all claims

| Place of search | Date of completion of the search | Examiner |
|---|---|---|
| VIENNA | 07-10-1991 | WIDHALM |